# EUROPÄISCHE PATENTSCHRIFT

(11) **EP 2 137 786 B1**
(45) Veröffentlichungstag und Bekanntmachung des Hinweises auf die Patenterteilung: **27.06.2012**
(21) Anmeldenummer: 08757942.1
(22) Anmeldetag: 15.04.2008
(51) Int. Cl.: H01M 10/14, H01M 10/16

(54) **AKKUMULATOR UND VERFAHREN ZUM HERSTELLEN EINES AKKUMULATORS**
ACCUMULATOR, AND METHOD FOR THE PRODUCTION OF AN ACCUMULATOR
ACCUMULATEUR ET PROCÉDÉ DE FABRICATION ASSOCIÉ

(30) Priorität: 18.04.2007 DE 102007018609
(43) Veröffentlichungstag der Anmeldung: 30.12.2009
(73) Patentinhaber: VB Autobatterie GmbH & Co. KGaA, 30419 Hannover (DE)
(72) Erfinder: BOSCH, Oliver, 30823 Garbsen (DE)
(74) Vertreter: Plöger, Jan Manfred
(86) Internationale Anmeldenummer: PCT/DE2008/000639
(87) Internationale Veröffentlichungsnummer: WO 2008/128517

(56) Entgegenhaltungen:
- EP-A- 1 515 379
- DE-U-202006 001 509
- JP-A- 7 161 374
- JP-A- 61 007 573
- JP-A- 62 064 050
- US-A- 5 607 797

## Beschreibung

Die Erfindung betrifft einen Akkumulator, insbesondere einen Bleiakkumulator mit einem Gehäuse und mindestens einem in dem Gehäuse angeordneten Plattenstapel, wobei der Plattenstapel eine Vielzahl von voneinander beabstandeten Polplatten besitzt, die zumindest in einer Umfangsrichtung vollständig mit einem Fixierelement umschlossen sind. Gemäß einem zweiten Aspekt betrifft die Erfindung ein Verfahren zum Herstellen eines Akkumulators.

Ein gattungsgemäßer Akkumulator ist beispielsweise aus der DE 20 2006 001 509 U1 bekannt. Dort wird ein Fixierelement in Form eines thermoplastisch verschweißten Bandes verwendet, um die Polplatten des Plattenstapels zusammenzuhalten. Ein wesentlicher Vorteil dieser Anordnung ist, dass das Gehäuse des Akkumulators mit einer geringen Wandstärke ausgelegt werden kann, da es keinen Druck mehr auf den Plattenstapel ausüben muss, um eine hinreichende Rottelfestigkeit des Akkumulators zu gewährleisten. Um insbesondere extrem starke Rüttelbelastungen unbeschadet zu überstehen, muss das Gehäuse jedoch noch immer eine beträchtliche Stärke aufweisen. Das führt zu einem hohen Materialverbrauch bei der Herstellung des Gehäuses und zu einem hohen Gewicht des Akkumulators. Nachteilig ist zudem, dass die Plattenstapel mit einer hohen geometrischen Genauigkeit gefertigt werden müssen. Der Plattenstapel muss nämlich einerseits groß genug sein, um auch bei starker Rüttelbelastung stets mit dem Gehäuse in Kontakt zu stehen. Andererseits muss der Plattenstapel so klein sein, dass er beim Einschieben in das Gehäuse nicht beschädigt wird. Diese hohe Genauigkeitsanforderung an den Plattenstapel und das Gehäuse führt zu hohen Fertigungskosten.

Aus der US 5,607,797 A ist ein Akkumulator bekannt, bei dem die Platten in Plattenhüllen eingetrasht sind. Die Plattenhüllen sind über ein angegossenes Fixierelement mit dem Gehäuse verbunden.

Aus der JP 62 064050 A ist ein Akkumulator bekannt, bei dem der Plattenstapel seitlich über ein elastisches Element vom Gehäuse getrennt ist. Dadurch kann eine Dickenvariation des Plattenstapels ausgeglichen werden.

Aus der JP 07 161374 A ist ein Akkumulator bekannt, bei dem über Vorsprünge eine Kraft auf die Plattenstapel ausgeübt wird, wobei diese Kraft in der Richtung der Ebene ausgeübt wird, entlang der sich die Platten erstrecken.

Aus der JP 61 007573 A ist ein Akkumulator bekannt, bei dem ein Vorsprung am Gehäuse vorgesehen ist, der in einer Ausnehmung im Verbinder der Polplatten eingreift.

Aus der EP 1 525 379 A2 ist ein Akkumulator bekannt, bei dem seitlich des Plattenstapels elastische Elemente angeordnet sind, die eine Bewegung des Plattenstapels relativ zum Gehäuse dämpfen und eine etwaige Ausdehnung des Plattenstapels kompensieren können.

Der Erfindung liegt die Aufgabe zugrunde, die Fertigung eines Akkumulators zu vereinfachen, ohne dessen Vibrationsstabilität zu beeinflussen.

Die Erfindung löst das Problem durch einen gattungsgemäßen Akkumulator, bei dem das Fixierelement fest mit dem Gehäuse verbunden ist. Gemäß einem zweiten Aspekt löst die Erfindung das Problem durch ein Verfahren mit den Schritten: (a) Bereitstellen eines Gehäuses, (b) Bereitstellen eines Plattenstapels, der eine Vielzahl von voneinander beabstandeten Polplatten besitzt, (c) Umschließen des Plattenstapels mit einem in einer Umfangsrichtung umlaufenden Fixierelement, (d) anschließend Einführen des Plattenstapels in das Gehäuse und (f) Verbinden des Fixierelements mit dem Gehäuse.

Vorteilhaft an der Erfindung ist, dass die Rüttelfestigkeit des Akkumulators erhöht wird und gleichzeitig die geometrischen Anforderungen an den Plattenstapel verringert werden können. Bei gleich bleibender geometrischer Anforderung an den Plattenstapel wird vorteilhafterweise das Risiko minimiert, dass es beim Einschieben des Plattenstapels in das Gehäuse zu Schäden am Gehäuse oder dem Plattenstapel kommt.

Vorteilhaft ist zudem die leichte fertigungstechnische Realisierbarkeit, so dass bestehende Fertigungsvorrichtungen einfach umrüstbar sind.

Es ist ein weiterer Vorteil, dass bei gleich bleibender Wandstärke des Gehäuses die Rüttelfestigkeit des Akkumulators erhöht ist. Bei vorgegebener Rüttelfestigkeit des Akkumulators kann vorteilhafterweise die Wandstärke des Gehäuses verringert werden, was zu einem geringeren Materialverbrauch führt und zu einem leichteren Akkumulator führt.

Im Rahmen der vorliegenden Beschreibung wird unter einem Fixierelement insbesondere jede Komponente des Akkumulators verstanden, die eine Kraft auf die Polplatten des Plattenstapels ausübt, so dass sich die Polplatten nicht von einander entfernen können Es ist möglich, nicht aber notwendig, dass das Fixierelement die Polplatten zusammenhält. Möglich ist auch, dass die Polplatten auf andere Weise zusammengehalten werden, beispielsweise durch Fügeverbindungen. Beispiele für Fixierelemente sind Banderolen, Hüllen, Ausnehmungen aufweisende Umhüllungen oder Netze. Fixierelemente können beispielsweise durch Verkleben oder Verschweißen mit dem Plattenstapel, Umschlingen und/oder Verkleben mit dem Plattenstapel verbunden werden.

Darunter, dass das Fixierelement fest mit dem Gehäuse verbunden ist, ist insbesondere zu verstehen, dass das Fixierelement so an dem Gehäuse befestigt ist, dass typischerweise beim Akkumulator auftretende Beschleunigungen und Vibrationen nicht dazu führen, dass sich das Fixierelement von dem Gehäuse löst. Es ist möglich, dass Fixierelement direkt mit dem Gehäuse zusammenzufügen, beispielsweise durch Schweißen, An- und/oder Einpressen. Besonders günstig ist es, das Fixierelement mit dem Gehäuse zu verkleben.

In einer bevorzugten Ausführungsform ist das Fixierelement mit einem Boden des Gehäuses verbunden. Alternativ oder additiv ist das Fixierelement zudem mit einer Innenseite einer Seitenwand des Gehäuses verbunden. Sofern sich mehrere Seitenwände des Gehäuses in Nähe des Fixierelements befinden, ist das Fixierelement bevorzugt mit allen diesen Seitenwänden verbunden. Hierdurch wird eine besonders hohe Rüttelfestigkeit erhalten.

Bevorzugt besitzt das Gehäuse in einen Innenraum des Gehäuses ragende T-förmige Rippen und das Fixierelement ist mit der bzw. den T-förmigen Rippen verbunden. Ein derartiger Akkumulator weist zwei Vorteile auf. Einerseits ergibt sich eine besonders hohe Rüttelfestigkeit aufgrund der T-förmigen Rippen und der Verbindung mit dem Plattenstapel über die Rippen. Andererseits erleichtert das Fixierelement das Einschieben des Plattenstapels in Richtung der Rippen. Ein Einschieben des Plattenstapels erfolgt in der Regel entlang einer Längserstreckung der Rippen. Kommt der Platten beim Einschieben mit einer Kante der Rippe in Kontakt, so gleitet er auf dem Fixierelement von der Kante weg und eine Beschädigung des Plattenstapels wird vermieden.

Eine besonders hohe Rüttelfestigkeit ergibt sich, wenn das Fixierelement auch mit einem Deckel des Gehäuses verbunden ist.

Eine besonders geeignete Möglichkeit, das Fixierelement mit dem Gehäuse zu verbinden, ist das Kleben, wobei günstigerweise eine säurefeste und/oder laugenfeste Klebeverbindung vorgesehen wird.

Als geeignetes Fixierelement hat sich ein faserverstärktes Kunststoffband, beispielsweise aus Polypropylen, Polyethylen, Polyvinylchlorid oder Polyethylenterephthalat herausgestellt.

Im Folgenden wird ein Ausführungsbeispiel der vorliegenden Erfindung anhand der beigefügten Zeichnungen näher erläutert. Dabei zeigt
- Figur 1: einen erfindungsgemäßen Akkumulator in einem Längsschnitt und
- Figur 2: eine zweite Ausführungsform eines erfindungsgemäßen Akkumulators in einem zweiten Schnitt, der senkrecht zu dem Schnitt gemäß Figur 1 verläuft.

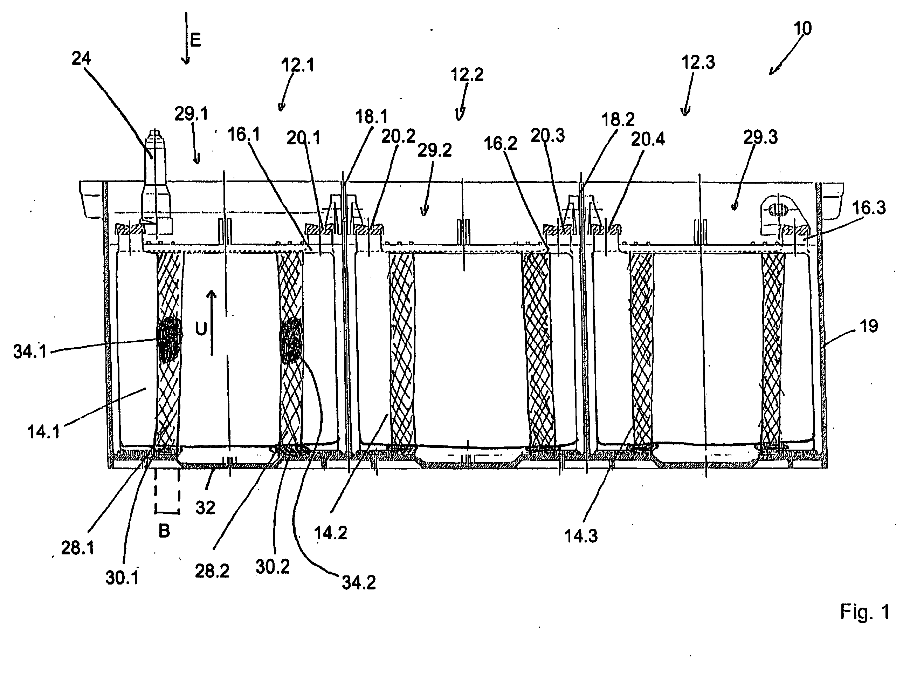

Figur 1 zeigt einen Akkumulator 10 in einer Querschnittsansicht, der galvanische Zellen 12.1 bis 12.6 umfasst, von denen in Figur 1 die galvanischen Zellen 12.1, 12.2 und 12.3 gezeigt sind. Die galvanischen Zellen 12.1, 12,2, 12.3 umfassen jeweils eine Vielzahl von voneinander beabstandeten Polplatten 14.1 bzw. 14.2 bzw. 14.3, die einen positiven Plattensatz bilden und negative Polplatten 16.1 bzw. 16.2 bzw. 16.3, die einen negativen Plattensatz bilden. Die galvanischen Zellen 12.1 bis 12.3 sind durch Trennwände 18.1, 18.2 voneinander räumlich und elektrisch getrennt und in einem Gehäuse 19 angeordnet. Im Folgenden bezeichnet ein Bezugszeichen mit Zählsuffix ".1", ".2", ... das jeweilige konkrete Objekt. Bezugszeichen ohne Zählsuffix beziehen sich auf das Objekt im Allgemeinen.

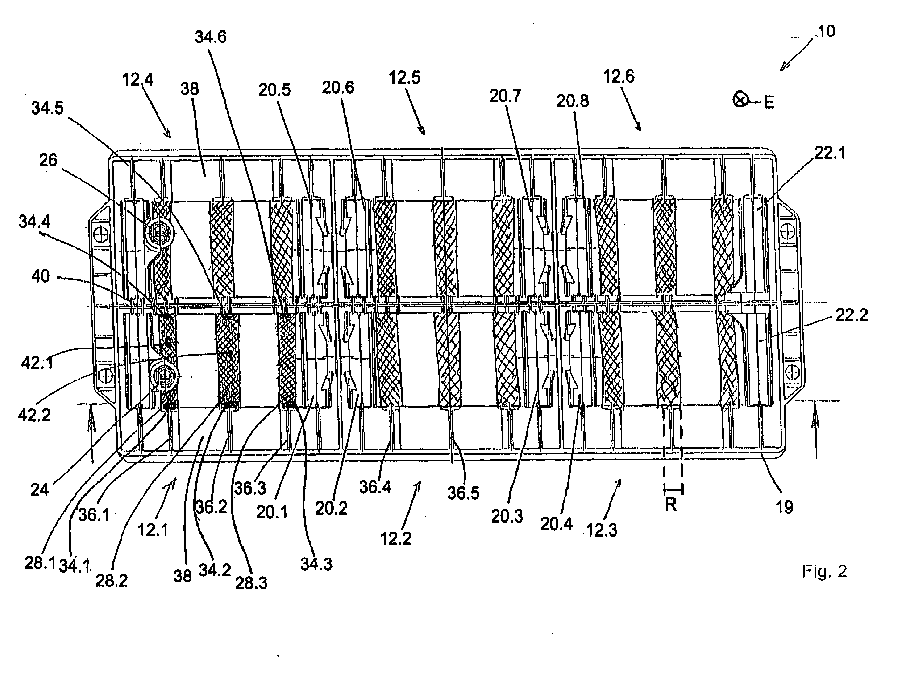

Die positiven Polplatten und die negativen Polplatten sind jeweils gesondert mechanisch und elektrisch mit einem Verbinder 20.1, 20.2, 20.3 bzw. 20.4 verbunden. Jeweils zwei Verbinder 20.1 und 20.2 bzw. 20.3 und 20.4 sind durch eine nicht eingezeichnete Öffnung in der jeweiligen Trennwand 18.1 bzw. 18.2 miteinander elektrisch und mechanisch verbunden, so dass die galvanischen Zellen 12.1 bis 12.3 in Reihe geschaltet sind. Der Akkumulator wird über einen Pluspol 24 und einen Minuspol 26 (Figur 2) kontaktiert.

Wie Figur 1 zeigt, werden die Polplatten 14, 16 in einer Umfangsrichtung, die durch einen Pfeil U angedeutet ist und senkrecht zur Längsrichtung des Akkumulators 10 verläuft, von zwei Fixierelementen 28.1, 28.2 vollständig umschlossen, die die Polplatten 14, 16 zusammenhalten, so dass jeweilige Plattenstapel 29.1., 29.2, 29.3 gebildet werden. Die Fixierelemente 28.1, 28.2 besitzen eine Fixierelementbreite B, die beispielsweise zwischen 20 mm und 30 mm beträgt. Es ist auch möglich, die Polplatten 14, 16 in einer Umfangsrichtung zu umschließen, die parallel zur Längsrichtung des Akkumulators 10 verläuft.

Die Fixierelemente 28.1, 28.2 sind durch bodenseitige Klebstoffpunkte 30.1, 30.2 mit einem Boden 32 des Gehäuses 19 fest verbunden. Über laterale Klebstoffpunkte 34.1, 34.2 sind die Fixierelemente 28.1, 28.2 zudem mit einer Seitenwand des Gehäuses 19 verbunden.

Figur 2 zeigt einen horizontalen Querschnitt durch eine zweite Ausführungsform eines erfindungsgemäßen Akkumulators. In der in Figur 2 gezeigten Ausführungsform besitzt das Gehäuse 19 eine Vielzahl an T-förmigen Rippen 36.1, 36.2, ..., die in einen Innenraum 38 des Akkumulators hineinragen. Die T-förmigen Rippen 36.1, ... besitzen eine Rippenbreite R, die um einen kleinen Betrag kleiner ist als die Fixierelementbreite B der Fixierelemente.

In der in Figur 2 gezeigten Ausführungsform ist der Plattenstapel 29 von drei Fixierelementen 28.1, 28.2, 38.3 umschlossen. Jedes der drei Fixierelemente 28.1 bis 28.3 ist, analog zu der in Figur 1 gezeigten Situation, mit drei nicht eingezeichneten bodenseitigen Klebstoffpunkten mit dem Boden des Gehäuses 19 verbunden. Die Fixierelemente 28.1 bis 28.3 sind so an dem Plattenstapel angeordnet, dass sie den T-förmigen Rippen 36.1 bis 36.3 direkt gegenüber liegen und sie sind mit Ihnen über laterale Klebstoffpunkte 34.1, 34.2 und 34.3 verbunden.

Das Gehäuse 19 besitzt zudem eine Längstrennwand 40, die die galvanischen Zellen 12.1 bis 12.3 von den galvanischen Zellen 12.4 bis 12.6 trennt. Die Fixierelemente 28.1, 28.2, 28.3 sind zusätzlich durch der Längstrennwand zugewandte laterale Klebstoffpunkte 34.4, 34.5, 34.6 an der Längstrennwand 40 fixiert. Es sind zudem deckelseitige Klebstoffpunkte 42.1, 42.2 vorgesehen, um die Fixierelemente mit einem nicht eingezeichneten Deckel dauerhaft zu verbinden.

Der Akkumulator 10 wird dadurch hergestellt, dass zunächst das Gehäuse 19 spritzgegossen wird. Es werden zudem aus den positiven bzw. negativen Polplatten 14, 16 Plattenstapel 29 aufgebaut und einem, zwei, drei, vier oder mehr Fixierelementen 28 umgeben. Anschließend werden die Fixierelemente 28 mit Klebstoff versehen und danach in einer durch einen Pfeil E angedeuteten Einschubrichtung in das Gehäuse 19 eingeschoben. Dabei gelangt der Klebstoff in Kontakt mit dem Gehäuse 19 und härtet aus. Nachfolgend wird Batterieflüssigkeit hinzugefügt, die deckelseitigen Klebstoffpunkte 42 werden gesetzt und ein nicht eingezeichneter Deckel wird auf das bestehende Gehäuse gasdicht aufgeschweißt, und die Herstellung des Akkumulators 10 abgeschlossen.

### Bezugszeichenliste

- 10: Akkumulator
- 12: galvanische Zelle
- 14: positive Polplatten
- 16: negative Polplatten
- 18: Trennwand

- 19: Gehäuse
- 20: Verbinder
- 22: Verbinder
- 24: Pluspol
- 26: Minuspol

- 28: Fixierelement
- 29: Plattenstapel
- 30: bodenseitiger Klebstoffpunkt
- 32: Boden
- 34: lateraler Klebstoffpunkt
- 36: T-förmige Rippe

- 38: Innenraum
- 40: Längstrennwand
- 42: deckelseitiger Klebstoffpunkt

- U: Umfangsrichtung
- B: Fixierelementbreite
- R: Rippenbreite
- E: Einschubrichtung

## Patentansprüche

1. Akkumulator (10), insbesondere prismatischer Bleiakkumulator, mit
(a) einem Gehäuse (19) und
(b) mindestens einem in dem Gehäuse (19) angeordneten Plattenstapel (29),
(c) wobei der Plattenstapel (29) eine Vielzahl von voneinander beabstandeten Polplatten (14, 16) besitzt, und
**(d) einem Fixierelement (28),**
**(e) wobei die Polplatten (14, 16) zumindest in einer Umfangsrichtung (U) vollständig von dem Fixierelement (28) umschlossen sind,**
**dadurch gekennzeichnet, dass**
**(f) das Fixierelement (28) fest mit dem Gehäuse (19) verbunden ist.**

2. Akkumulator (10) nach Anspruch 1, **dadurch gekennzeichnet, dass** das Fixierelement (28) mit einem Boden (32) des Gehäuses (19) verbunden ist.

3. Akkumulator (10) nach einem der vorstehenden Ansprüche, **dadurch gekennzeichnet, dass** das Fixierelement (28) mit einer Innenseite einer Seitenwand des Gehäuses (19) verbunden ist.

4. Akkumulator (10) nach Anspruch 3, **dadurch gekennzeichnet, dass** das Gehäuse (19) in einen Innenraum (38) des Gehäuses ragende T-förmige Rippen (36) besitzt und das Fixierelement (28) mit der T-förmigen Rippe (36) verbunden ist.

5. Akkumulator (10) nach einem der vorstehenden Ansprüche, **dadurch gekennzeichnet, dass** das Fixierelement (28) mit einem Deckel des Gehäuses (19) verbunden ist.

6. Akkumulator (10) nach einem der vorstehenden Ansprüche, **dadurch gekennzeichnet, dass** Fixierelement (28) mit dem Gehäuse (19) verklebt ist.

7. Akkumulator (10) nach einem der vorstehenden Ansprüche, **dadurch gekennzeichnet, dass** das Fixierelement (28) ein faserverstärktes, insbesondere ein verschweißtes, Kunststoffband ist.

8. Verfahren zum Herstellen eines Akkumulators (10), insbesondere eines prismatischen Bleiakkumulators, mit den Schritten:
(a) Bereitstellen eines Gehäuses (19),
(b) Bereitstellen eines Plattenstapels (29), der eine Vielzahl von voneinander beabstandeten Polplatten (14, 16) besitzt,
(c) Zumindest in einer Umfangsrichtung (U) vollständiges Umschließen des Plattenstapels (29) mit einem in einer Umfangsrichtung (U) umlaufenden Fixierelement (28),
(d) anschließend Einschieben des Plattenstapels (29) in das Gehäuse (19) und
(e) Verbinden des Fixierelements (28) mit dem Gehäuse (19).

9. Verfahren nach Anspruch 8, **dadurch gekennzeichnet, dass** das Verbinden ein Kleben ist.

10. Verfahren nach einem der Ansprüche 8 oder 9, **dadurch gekennzeichnet, dass** ein Gehäuse (19) bereitgestellt wird, das mindestens eine in den Innenraum (38) ragende Rippe (36) besitzt und dass das Fixierelement (28) so angeordnet wird, dass es beim Einschieben des Plattenstapels in das Gehäuse (19) an der Rippe (36) entlang gleitet.

## Claims

1. An accumulator (10), in particular a prismatic lead-acid accumulator, having
(a) a housing (19) and
(b) at least one plate stack (29) which is arranged in the housing (19),
(c) wherein the plate stack (29) has a multiplicity of pole plates (14, 16) which are separated from one another, and
(d) a fixing element (28),
(e) wherein the pole plates (14, 16) are completely surrounded by the fixing element (28) at least in one circumferential direction (U),
**characterized in that**
(f) the fixing element (28) is firmly connected to the housing (19).

2. The accumulator (10) as claimed in claim 1, **characterized in that** the fixing element (28) is connected to a bottom (32) of the housing (19).

3. The accumulator (10) as claimed in one of the preceding claims, **characterized in that** the fixing element (28) is connected to an inner face of a side wall of the housing (19).

4. The accumulator (10) as claimed in claim 3, **characterized in that** the housing (19) has T-shaped ribs (36) which project into an internal area (38) of the housing, and the fixing element (28) is connected to the T-shaped rib (36).

5. The accumulator (10) as claimed in one of the preceding claims, **characterized in that** the fixing element (28) is connected to a cover of the housing (19).

6. The accumulator (10) as claimed in one of the preceding claims, **characterized in that** the fixing element (28) is adhesively bonded to the housing (19).

7. The accumulator (10) as claimed in one of the preceding claims, **characterized in that** the fixing element (28) is a fiber-reinforced, in particular a welded, plastic tape.

8. A method for production of an accumulator (10), in particular of a prismatic lead-acid accumulator having the following steps:
(a) provision of a housing (19),
(b) provision of a plate stack (29) which has a multiplicity of pole plates (14, 16) which are separated from one another,
(c) completely surrounding of the plate stack (29) at least in one circumferential direction with a fixing element (28) which is circumferential in a circumferential direction (U),
(d) then, insertion of the plate stack (29) into the housing (19), and
(e) connection of the fixing element (28) to the housing (19).

9. The method as claimed in claim 8, **characterized in that** the connection is adhesive bonding.

10. The method as claimed in one of claims 8 or 9, **characterized in that** a housing (19) is provided, which has at least one rib (36) projects into the internal area (38), and **in that** the fixing element (28) is arranged such that it slides along the rib (36) when the plate stack is inserted into the housing.

## Revendications

1. Accumulateur (10), en particulier accumulateur prismatique au plomb, présentant
(a) un boîtier (19) et
(b) au moins un empilement (29) de plaques disposé dans le boîtier (19),
(c) l'empilement (29) de plaques possédant plusieurs plaques polaires (14, 16) maintenues à distance les unes des autres et
(d) un élément de fixation (28),
(e) les plaques polaires (14, 16) étant entourées complètement par l'élément de fixation (28) au moins dans la direction périphérique (U),
**caractérisé en ce que**
(f) l'élément de fixation (28) est relié solidairement au boîtier (19).

2. Accumulateur (10) selon la revendication 1, **caractérisé en ce que** l'élément de fixation (28) est relié au fond (32) du boîtier (19).

3. Accumulateur (10) selon l'une des revendications précédentes, **caractérisé en ce que** l'élément de fixation (28) est relié au côté intérieur d'une paroi latérale du boîtier (19).

4. Accumulateur (10) selon la revendication 3, **caractérisé en ce que** le boîtier (19) possède des nervures (36) en forme de T qui débordent dans un espace intérieur (38) du boîtier et **en ce que** l'élément de fixation (28) est relié à la nervure (36) en forme de T.

5. Accumulateur (10) selon l'une des revendications précédentes, **caractérisé en ce que** l'élément de fixation (28) est à un couvercle du boîtier (19).

6. Accumulateur (10) selon l'une des revendications précédentes, **caractérisé en ce que** l'élément de fixation (28) est collé sur le boîtier (19).

7. Accumulateur (10) selon l'une des revendications précédentes, **caractérisé en ce que** l'élément de fixation (28) est un ruban en matière synthétique renforcée de fibres et est en particulier soudé.

8. Procédé de fabrication d'un accumulateur (10), en particulier d'un accumulateur prismatique au plomb, le procédé comportant les étapes qui consistent à :
(a) préparer un boîtier (19),
(b) préparer un empilement (29) de plaques qui possède plusieurs plaques polaires (14, 16) maintenues à distance les unes des autres,
(c) entourer complètement l'empilement (29) de plaques au moins dans une direction périphérique (U) par un élément de fixation (28) qui l'entoure dans la direction périphérique (U),
(d) ensuite, insérer l'empilement (29) de plaques dans le boîtier (19) et
(e) relier l'élément de fixation (28) au boîtier (19).

9. Procédé selon la revendication 8, **caractérisé en ce que** la liaison est un collage.

10. Procédé selon l'une des revendications 8 ou 9, **caractérisé en ce qu'**on y prépare un boîtier (19) qui possède au moins une nervure (36) qui déborde dans l'espace intérieur (38) et **en ce que** l'élément de fixation (28) est disposé de telle sorte qu'il glisse le long de la nervure (36) lors de l'insertion de l'empilement de plaques dans le boîtier (19).
